Europäisches Patentamt

European Patent Office

Office européen des brevets

(11) Numéro de publication: **0 331 219**
**A1**

## (12) DEMANDE DE BREVET EUROPEEN

(21) Numéro de dépôt: 89200240.3

(22) Date de dépôt: 03.02.89

(51) Int. Cl.4: **A01K 1/01**

(30) Priorité: 02.03.88 BE 8800241

(43) Date de publication de la demande:
06.09.89 Bulletin 89/36

(84) Etats contractants désignés:
**BE ES FR NL**

(71) Demandeur: **Dervaux, Guido**
**Pollepelstraat 9**
**B-8660 Geluwe (Wervik)(BE)**

(72) Inventeur: **Dervaux, Guido**
**Pollepelstraat 9**
**B-8660 Geluwe (Wervik)(BE)**

(74) Mandataire: **Pieraerts, Jacques et al**
**Bureau Gevers S.A. rue de Livourne 7 bte 1**
**B-1050 Bruxelles(BE)**

(54) Dispositif pour évacuer les urines d'animaux d'élevage.

(57) Dispositif pour évacuer les urines d'animaux d'élevage, comportant des cages pourvues d'un font permettant le passage d'urine et d'excréments, où une bande permettant le pasage de l'urine est montée sous ledit sol, et des moyens pour collecter l'urine, où ladite bande délimite le long de la face supérieure un tunnel d'où l'air peut être aspiré à l'aide d'un ventilateur ou d'un équipement équivalent, caractérisé en ce que ladite bande (2) perforée et permettant le passage de l'urine repose sur un treillis (6) et lesdits moyens pour collecter l'urine sont formés par une plaque (7) qui s'étend en dessous de ladite bande sur toute ou presque toute la largeur de ladite bande.

Fig.2.

EP 0 331 219 A1

## Dispositif pour évacuer les urines d'animaux d'élevage.

L'invention concerne un dispositif pour évacuer les urines d'animaux d'élevage, dans lequel les cages sont placées les unes à côté des autres et comportent un fond permettant le passage d'urine et d'excréments, où une bande permettant le passage de l'urine est disposée sous ledit sol, ladite bande coopérant avec des moyens pour collecter l'urine, où ladite bande délimite le long de la face supérieure un tunnel fermé ou presque fermé d'où l'aire peut être aspiré à l'aide d'un ventilateur ou d'un équipement équivalent.

Dans le brevet belge n° 894.784 au nom du demandeur, il est décrit un dispositif qui satisfait dans la plupart des points et correspond au but fixé, c'est-à-dire l'évacuation de l'air chargé d'ammoniac de telle façon que les animaux restent en permanence dans une atmosphère saine.

Dans le dispositif suivant ledit brevet la bande perforée permettant le passage d'urine repose sur des tôles ondulées, ce qui comporte toutefois certaines désavantages puisque :

1° une partie de cette bande repose pour au moins 20 % de sa superficie sur les tôles ondulées de telle façon que pas ou peu d'urine et en aucun cas l'air ne peut passer à travers la bande en ces endroits;

2° le sédiment de l'urine, avec ses constituants calcaires, se dépose sur les tôles ondulées et l'évacuation de ceux-là ne peut être que difficilement effectuée. Aussi le peu d'espace entre les tôles ondulées et la bande perforée semble être rapidement rempli avec tous les désavantages qui s'ensuivent;

3° l'eau qui sert au nettoyage des tôles ondulées, sur lesquelles repose la bande perforée ne peut pas être collectée dans son intégralité par la corniche de décharge prévue à cet effet. Une partie de l'eau utilisée pour le nettoyage n'est donc pas évacuée de façon satisfaisante.

L'invention a pour but de rémédier à ce désavantage et à d'autres désavantages de ces structures et de présenter également une solution grâce à laquelle la quantité d'air aspiré par unité de temps peut être augmenté à débit égal du ventilateur utilisé.

Afin de réaliser ceci suivant l'invention ladite bande perforée et permettant le passage de l'urine repose sur un treillis et lesdits moyens pour collecter l'urine sont formés par une plaque qui s'étend en dessous de ladite bande sur toute ou presque toute la largeur de cette bande.

D'autres détails et avantages de l'invention seront décrit dans un dispositif, suivant l'invention, pour évacuer les urines d'animaux d'élevage. Cette description est uniquement donnée à titre d'exemple et ne limite pas l'invention. Les références se rapportent aux dessins ci-joints.

La figure 1 montre de façon schématique et suivant une vue en coupe un dispositif suivant ledit brevet belge.

La figure 2 montre également de façon schématique et suivant une vue en coupe le dispositif amélioré.

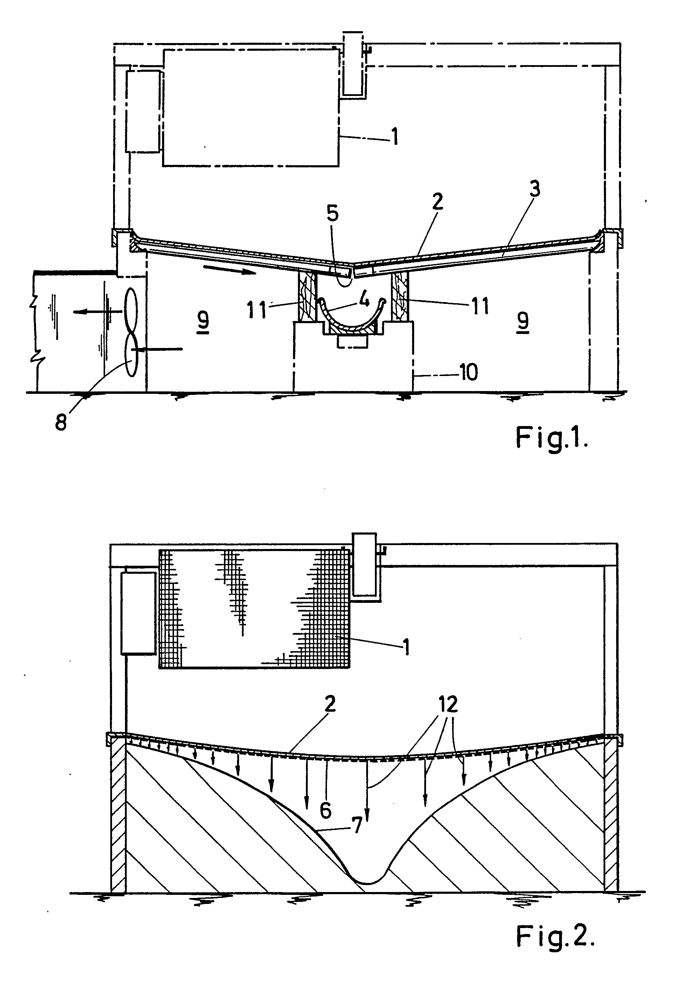

Dans les deux figures les cages pour l'élevage de lapins ou autres animaux sont indiquées par la référence 1. La référence 2 indique la bande perforée pour collecter les excréments et laisser passer l'urine. Cette bande perforée repose, à gauche et à droite, suivant la figure 1, sur des tôles ondulées 3. Une corniche 4 est prévue au milieu et est destinée à collecter l'urine qui s'écoule vers le bas dans la fente entre les tôles 3.

Les problèmes qui se posent avec un dispositif du genre décrit doivent principalement être vus dans l'encrassement qui se produit entre la bande 2 et les tôles ondulées 3. Le sédiment d'urine comporte une partie non négligable de calcaire et le dépôt de ce calcaire sur les tôles ondulées rend difficile leur nettoyage au un jet d'eau. Egalement lorsqu'on nettoie ces tôles, une certaine partie de l'eau utilisée pour le nettoyage n'atterrit pas nécessairement dans la corniche 4 mais bien à côté de cette corniche de telle façon que la suite de l'entretien du dispositif pose des problèmes.

Le demandeur a constaté que de sensibles améliorations peuvent être apportées à la structure d'un tel dispositif en y apportant principalement les deux modifications décrites ci-dessous.

D'abord la bande perforée 2 ne repose plus sur des tôles ondulées 3, ce qui provoquait la situation désavantageuse décrite ci-dessus, mais bien sur un treillis 6. Grâce à cela l'urine peut pénétrer de façon égale à n'importe quel endroit de la bande 2, alors que le dépôt de calcaire causé par l'urine qui s'écoule peut être considéré comme non existant sur le treillis. Le treillis s'étend en une pièce de l'un côté du dispositif vers l'autre.

Pour collecter l'urine qui s'infiltre à travers la bande 2 il est prévu une plaque continue 7 qui s'étend sur toute la largeur du dispositif. Cette plaque 7 qui forme l'égout du dispositif, est de préférence formé d'une seule plaque, mais il est également possible que cette plaque en forme d'égout soit constituée de plusieurs éléments.

Lors du nettoyage d'aussi bien la bande perforée 2 que le treillis 6 étendu en dessous de cette bande les problèmes décrits dans le préambule ne se posent plus.

La pente des deux côtés de la partie en forme de corniche, de la plaque 7 située le plus vers le bas est supérieure à celle illustrée dans la forme de réalisation suivant la figure 1, ce qui signifie également que un dépôt, de quelque origine qu'il soit, et qui s'accumulerait sur cette plaque, pourrait être évacué sans le moindre problème.

Lorsque, suivant la forme de réalisation suivant la figure 1, un ventilateur 8 est disposé dans l'espace 9, en dessous des plaques 3, ce ventilateur peut, suivant la forme de réalisation de la figure 2, se trouver dans l'axe longitudinal du dispositif et aspirer uniquement l'aire en provenance de l'espace délimité par la bande perforée 2 et la plaque 7. Ceci signifie que pour une même capacité de ventilateur une plus grande quantité d'air est traitée par unité de temps.

Il faut également signaler que le support 10 de la corniche 4 (figure 1) et les supports 11 pour les tôles 3 peuvent désormais être complètement omis.

Lors d'un nettoyage à l'aide d'un jet d'eau de la bande 2 et du treillis étendu sous cette bande et lors du nettoyage en profondeur de la plaque 7 on évite maintenant complètement que l'eau de rinçage pourrait mouiller ou salir les structures du dispositif qui se trouvent à proximité de la partie inférieure de la plaque 7.

De la description donnée ci-dessus il apparaît donc clairement comment les nouvelles structures garantissent une amélioration du système existant.

Dans la forme de réalisation précédente l'urine s'infiltrait le long des plaques 6 pour atteindre la corniche 4 par la fente 5. Suivant la nouvelle forme de réalisation l'urine s'infiltre, sur toute la surface de la bande perforée 2, ce qui est rendu plus clair grâce aux flèches 12.

L'invention n'est pas limitée à la forme de réalisation décrite ci-dessus et différentes améliorations peuvent être apportées sans pour autant quitter le cadre de la présente demande de brevet.

## Revendications

Dispositif pour évacuer les urines d'animaux d'élevage, dans lequel les cages sont placées les unes à côté des autres et comportent un fond permettant le passage d'urine et d'excréments, où une bande permettant le passage de l'urine est montée sous ledit sol, ladite bande coopérant avec des moyens pour collecter l'urine, où ladite bande délimite le long de la face supérieure un tunnel fermé ou à peu près fermé d'où l'aire peut être aspiré à l'aide d'un ventilateur ou d'un équipement équivalent, caractérisé en ce que ladite bande (2) perforée et permettant le passage de l'urine repose sur un treillis (6) et lesdits moyens pour collecter l'urine sont formés par une plaque (7) qui s'étend en dessous de ladite bande sur toute ou presque toute la largeur de ladite bande.

Fig.1.

Fig.2.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y,D | BE-A-894748 (DERVAUX) <br> * revendications 1, 2; figure 2 * <br> --- | 1 | A01K1/01 |
| Y | DE-U-8522990 (CUSTERS) <br> * page 3, ligne 25 - page 4, ligne 1; figure 1 * <br> --- | 1 | |
| Y | US-A-4023531 (THOMPSON) <br> * colonne 4, ligne 8 - ligne 14; figure 8 * <br> --- | 1 | |
| A | US-A-1719974 (FENNER) <br> * page 1, ligne 76 - ligne 92; figure 1 * <br> ----- | 1 | |

DOMAINES TECHNIQUES
RECHERCHES (Int. Cl.4 )

A01K

Le présent rapport a été établi pour toutes les revendications

| Lieu de la recherche | Date d'achèvement de la recherche | Examinateur |
|---|---|---|
| LA HAYE | 01 JUIN 1989 | VON ARX V.U. |